# EUROPÄISCHE PATENTSCHRIFT

(11) **EP 2 786 225 B1**
(45) Veröffentlichungstag und Bekanntmachung des Hinweises auf die Patenterteilung: **09.12.2020**
(21) Anmeldenummer: 12816020.7
(22) Anmeldetag: 10.12.2012
(51) Int. Cl.: G06F 1/3287, G06F 11/20, B60W 50/023, B60W 50/00

(54) **VERFAHREN ZUM BETREIBEN MINDESTENS ZWEIER DATENVERARBEITUNGSEINHEITEN MIT HOHER VERFÜGBARKEIT, INSBESONDERE IN EINEM FAHRZEUG, UND VORRICHTUNG ZUM BETREIBEN EINER MASCHINE**
METHOD FOR OPERATING AT LEAST TWO DATA PROCESSING UNITS WITH HIGH AVAILABILITY, IN PARTICULAR IN A VEHICLE, AND DEVICE FOR OPERATING A MACHINE
PROCÉDÉ POUR FAIRE FONCTIONNER AU MOINS DEUX UNITÉS DE TRAITEMENT DE DONNÉES DE GRANDE DISPONIBILITÉ, NOTAMMENT DANS UN VÉHICULE, ET DISPOSITIF POUR FAIRE FONCTIONNER UNE MACHINE

(30) Priorität: 27.01.2012 DE 102012201185
(43) Veröffentlichungstag der Anmeldung: 08.10.2014
(73) Patentinhaber: Siemens Aktiengesellschaft, 80333 München (DE)
(72) Erfinder: ARMBRUSTER, Michael, 81825 München (DE); FEHLING, Marcus, 81739 München (DE); FIEGE, Ludger, 85567 Grafing (DE); FREITAG, Gunter, 81735 München (DE); KLEIN, Cornel, 82041 Oberhaching (DE)
(86) Internationale Anmeldenummer: PCT/EP2012/074920
(87) Internationale Veröffentlichungsnummer: WO 2013/110394

(56) Entgegenhaltungen:
- DE-A1- 19 749 068
- DE-A1- 19 834 870
- US-B2- 7 979 746

## Beschreibung

Die Erfindung betrifft ein Verfahren zum Betreiben mindestens zweier Datenverarbeitungs-Einheiten, kurz DV Einheiten, mit hoher Verfügbarkeit, insbesondere in einem Fahrzeug. Eine erste DV Einheit und eine zweite DV Einheit können jeweils mindestens eine gleiche Funktion oder mindestens 10 Prozent die gleichen Funktionen erbringen. Typischerweise erbringen die DV Einheiten jeweils zu mindestens 60 Prozent oder zu mindestens 90 Prozent die gleichen Funktionen erbringen, bezogen auf bspw. den Maschinencode der ersten DV Einheit. Beide Einheiten führen bspw. die gleichen Schritte aus. Im Fehlerfall erfolgt bspw. ein Abschalten der automatischen Steuerung der Maschine, z.B. eines Autos, mit Übergang zur manuellen Steuerung oder ein Umschalten auf Rückzugsverfahren bei denen bspw. nur noch eine der beiden DV Einheiten arbeitet. Außerdem betrifft die Erfindung eine zugehörige Vorrichtung zum Betreiben einer Transportmaschine.

Aus der US 7,979,746 B2 sind dual-dual "lockstep" Prozessoren bekannt, die paarweise zueinander redundant sind und wobei innerhalb eines Paares ebenfalls zwei zueinander redundante Prozessoren vorhanden sind. Aus der DE 197 49 068 A1 ist ein Verfahren zur Überwachung eines Rechnersystems bestehend aus wenigstens zwei Prozessoren bekannt, wobei die Prozessoren voneinander verschiedene Funktionen ausführen.

Die DE 198 34 870 A1 beschreibt zwei redundante Systeme zum Ansteuern eines Lenkstellers eines Fahrzeugs. Im Normalbetrieb ist eines der Systeme aktiv, und das andere passiv.

Die Systeme tauschen über einen jeweiligen Prozessrechner Fehlerinformationen aus. Die Prozessrechner sind in der Lage, das jeweils andere System im Fehlerfall abzuschalten.

Es ist Aufgabe der Erfindung ein Verfahren anzugeben, das trotz des Vorliegens einer hohen Redundanz, d.h. Verfügbarkeit, energieeffizient arbeitet. Außerdem soll eine entsprechende Vorrichtung angegeben werden.

Die auf das Verfahren bezogene Aufgabe wird durch ein Verfahren mit den im Anspruch 1 angegebenen Verfahrensschritten gelöst. Weiterbildungen sind in den Unteransprüchen angegeben.

Bei dem Verfahren entfernt die zweite Datenverarbeitungseinheit automatisch mindestens einen Vermerk für einen auszuführenden Prozess aus einer Speichereinheit oder versetzt sich automatisch in einen Ruhezustand.

Damit wird die Entscheidung über das Abschalten der Redundanz intern in der zweiten Datenverarbeitungseinheit, kurz Einheit, getroffen. Die zweite Einheit ist der ersten Einheit in diesem Fall bezüglich der Redundanz nachrangig. Ist die Entscheidung über das Abschalten der Redundanz falsch, so wird dies durch das Gesamtkonzept der Redundanz bzw. Fehlertoleranz abgefangen, wonach ein Fehler in einer der beiden Einheiten auftreten kann.

Insbesondere wird das Abschalten der Redundanz also nicht von außen veranlasst, z.B. durch die erste Einheit. Wäre in diesem Fall die Entscheidung über das Abschalten falsch, so würde sich die Fehlentscheidung über die erste Einheit hinaus auch auf die die zweite DV Einheit fortpflanzen, was einem Grundkonzept der Fehlertoleranz widerspricht.

Auch in der ersten DV Einheit kann automatisch mindestens ein Vermerk für einen auszuführenden Prozess durch die erste DV Einheit aus einer Speichereinheit entfernt werden oder die erste DV Einheit kann sich automatisch in einen Ruhezustand versetzen, wobei dann die erste DV Einheit bezüglich der Redundanz nachrangig wäre, z.B. Slave-Einheit in einer Master/Slave Beziehung der beiden DV Einheiten.

In beiden Einheiten kann der gleiche Maschinencode gespeichert sein, womit sich eine Redundanz von 100 Prozent ergibt.

Bei dem Verfahren werden somit nicht beide Einheiten abgeschaltet, sondern nur die eine der beiden Einheiten. Das Abschalten erfolgt auch nicht auf Grund eines Fehlers der zweiten Einheit, da diese noch voll funktionsfähig ist, sondern aus anderen Gründen. Ein solcher Grund ist bspw. die Verringerung des Stromverbrauchs. Ein kleiner Stromverbrauch ist für ein Elektrofahrzeug oder ein Hybridfahrzeug mit Elektromotor und Verbrennungsmotor in der Antriebseinheit besonders wichtig, um die Reichweite des elektromotorischen Antriebs zu Erhöhen. Aber auch bei einem Fahrzeug, das nur einen Verbrennungsmotor in der Antriebseinheit enthält, kann eine Verringerung des Stromverbrauchs zu einer Verringerung des Treibstoffverbrauchs führen. Das Abschalten erfolgt bspw. durch Abschalten der Stromversorgung der Einheit oder durch Trennen der Einheit von ihrer Stromversorgung. alternativ können auch die Prozessoren der Einheit abgeschaltet werden.

Ebenso verhält es sich mit dem Entfernen des Vermerks für den auszuführenden Prozess. Der Vermerk wird entfernt, obwohl der Prozess fehlerfrei ausgeführt werden könnte. Das Entfernen des Vermerks führt dazu, dass der Prozess nur noch von der ersten Einheit ausgeführt wird. Die zweite Einheit führt den Prozess nicht mehr aus, was die benötigte Rechenleistung verringert. Werden auf diese Art eine Vielzahl von Prozessen nicht ausgeführt, z.B. mehr als 10 oder sogar mehr als 100, so kann die benötigte Rechenleistung erheblich reduziert werden, was sich auf den benötigen Stromverbrauch eines Prozessors der zweiten Einheit auswirkt. Eine Prozessüberwachung der zweiten Einheit kann nach dem Entfernen der Vermerke für eine ausreichende Anzahl von Prozessen sogar zu dem Ergebnis kommen, dass der Prozessor der zweiten Einheit bzw. die zweite Einheit ganz ausgeschaltet werden kann oder in einen Ruhezustand versetzt werden kann. Alternativ kann es mehrere Ruhezustände geben mit jeweils im Vergleich zum vorhergehenden Ruhezustand verringertem Energieverbrauch.

Der Energieverbrauch eines Prozessors kann im Bereich von 15 bis 50 Watt liegen. Wird bspw. ein Prozessor für insgesamt eine Stunde abgeschaltet, so werden 50 Wattstunden eingespart. Damit wird die vorhandene Energie effizient genutzt.

Das Entfernen der Vermerke erfolgt bspw. durch Verändern des Datenwertes einer Speicherzelle, bspw. eines Datums, das angibt, ob der betreffende Prozess ausgeführt werden soll oder nicht.

Das Entfernen der Vermerke oder das Versetzen in den Ruhebetriebszustand erfolgt abhängig vom Betriebszustand einer Transportmaschine , für deren Betrieb die DV Einheiten verwendet werden. Erfindungsgemäß erfolgt das Entfernen des mindestens einen Vermerks oder das Versetzen in den Ruhezustand beim Betriebszustand Halten.

Die Transportmaschine kann ein Fahrzeug sein, z.B. ein Elektrofahrzeug, ein Hybridfahrzeug oder ein Fahrzeug, das nur durch einen Verbrennungsmotor angetrieben wird. Es kommen Fahrzeuge jeder Größe in Frage, d.h. Nutzfahrzeuge, insbesondere Lastkraftwagen, Busse, Personenkraftfahrzeuge, Motorräder, Fahrräder usw. Die Transportmaschine kann aber auch ein Flugzeug, Boot oder Schiff sein.

Der Betriebszustand kann mit Hilfe mindestens einer Sensoreinheit auf einfache Art erfasst werden, insbesondere mit einem Bewegungssensor, einem Geschwindigkeitssensor oder einem Drehzahlsensor. Die Sensoreinheit arbeitet bspw. mechanisch und/ oder elektronisch.

Der Betriebszustand kann der Zustand "Halten", "Laden eines Akkus", der Zustand "Fahren" oder ein anderer Betriebszustand sein. Der Zustand "Fahren" kann insbesondere in mindestens zwei Unterzustände eingeteilt werden, z. B. in die Zustände Fahren mit kleiner Geschwindigkeit, Fahren mit mittlerer Geschwindigkeit und Fahren mit hoher Geschwindigkeit. Die obere Grenze für die kleine Geschwindigkeit liegt bspw. im Bereich von 3 km/h (Kilometer pro Stunde) bis 10 km/h. Die untere Grenze für die große Geschwindigkeit liegt bspw. im Bereich von 50 km/h bis 80 km/h oder sogar bis 100 km/h.

Die Sicherheitsanforderungen bspw. an den Schutz von Insassen oder Personen und damit an die Zuverlässigkeit von technischen Systemen unterscheiden sich innerhalb dieser Bereiche erheblich voneinander. Die jeweils geforderte Zuverlässigkeit von elektronischen Einrichtungen kann durch Verwendung dieser Bereiche auf einfache Art auch beim Abschalten von Redundanz berücksichtigt werden.

Die Datenverarbeitungseinheiten können an einem Datenübertragungsnetz mit einem Datenübertragungsprotokoll betrieben werden, das das Einschalten von Prozessoren oder Netzeinheiten/ Übertragungseinheiten ermöglicht, insbesondere an einem Ethernet.

Bei einem Ethernet gibt es bspw. die Möglichkeit eines "Wake on LAN" (Local Area Network), womit die zweite Einheit nach dem Abschalten wieder auf einfache Art eingeschaltet werden kann. Nach dem Einschalten der zweiten Einheit startet bspw. automatisch ein Bootvorgang, zum Laden eines BIOS (Basic Input Output System) aus einem Festwertspeicher in einen schnellen Arbeitsspeicher gefolgt vom Laden zentraler Teile eines Betriebssystems in den schnellen Arbeitsspeicher oder in einen anderen schnellen Arbeitsspeicher.

Alternativ kann jedoch auf andere Art und Weise als über das Datenübertragungsnetz bzw. die Datenübertragungsnetze auch eine Stromversorgung schaltungstechnisch wieder eingeschaltet bzw. zugeschaltet werden, bspw. über ein Relais oder über einen Transistor.

Das Einschalten kann abhängig von einem erfassten Betriebszustand der Maschine erfolgen, bspw. einem Geschwindigkeitswechsel einer Transportmaschine, insbesondere für den Personentransport, einschließlich eines Fahrers.

Das Einschalten kann im Gegensatz zum Ausschalten von außen gesteuert werden, d.h. von einer anderen Einheit als die zweite Einheit, weil eine Fehlentscheidung beim Einschalten, dazu führt, dass die Redundanz erhöht wird durch Einschalten der zweiten Einheit. Die zweite Einheit würde sich dann bspw. wieder abschalten.

Der entfernte Vermerk kann automatisch wieder durch die zweite Datenverarbeitungseinheit eingetragen werden, bspw. abhängig vom aktuellen Betriebszustand der Maschine. Dies kann durch die zweite DV Einheit erfolgen, wenn die zweite DV Einheit noch nicht ganz abgeschaltet worden ist oder nach einem Abschalten und anschließenden Einschalten der zweiten DV Einheit. In beiden Fällen wurden die entfernten Vermerke bspw. zwischenzeitlich an einer anderen Stelle gespeichert, um das erneute Eintragen zu erleichtern.

Der Ruhezustand kann ein Zustand sein, in dem die Stromversorgung der zweiten Datenverarbeitungseinheit abgeschaltet ist oder in dem die zweite Datenverarbeitungseinheit von ihrer Stromversorgung getrennt wird. Beim Einschalten bootet die zweite DV Einheit dann erneut, was jedoch innerhalb von bspw. kleiner 50 ms (Millisekunden) oder innerhalb einer Zeit kleiner als 100 ms erfolgen kann.

Der Ruhezustand kann durch die erste Datenverarbeitungseinheit beendet werden, insbesondere durch Veranlassen des Einschaltens einer Stromversorgung der zweiten Datenverarbeitungseinheit oder durch Veranlassen des Verbindens der Stromversorgung der zweiten DV Einheit mit der zweiten DV Einheit, z.B. einer zentralen Stromversorgung.

Die Stromversorgung erfolgt bspw. unter Verwendung eines eigenen Schaltnetzteils und/oder einer Schaltung zur Spannungsstabilisierung.

Jede Datenverarbeitungseinheit kann jeweils mindestens zwei Prozessoren enthalten. Diese Prozessoren können ebenfalls Bestandteile von separaten Unter-Datenverarbeitungseinheiten sein, kurz Unter-Einheiten. Die beiden Prozessoren können die gleichen Funktionen erbringen, um eine Redundanz innerhalb der ersten Einheit bzw. der zweiten Einheit zu erzeugen. Ziel ist es eine hohe Fehlerselbsterkennung pro DV Einheit zu erreichen. Bspw. stimmt der Maschinencode in einem Speicher der Unter-Einheiten zu 100 Prozent überein, zu mindestens 90 Prozent oder zu mindestens 60 Prozent. Die Prozessoren der Unter-Einheiten einer Datenverarbeitungseinheit prüfen ihre Bearbeitungsergebnisse bspw. gegenseitig. Nur bei Übereinstimmung der Ergebnisse werden die zu diesen Ergebnissen gehörenden Daten in einer anderen DV Einheit weiterbearbeitet.

Damit gibt es insgesamt mindestens vier redundante Prozessoren, was für Steuerfunktionen mit Bezug zu der Sicherheit von Personen derzeit als ausreichend angesehen wird. Aus Rechenkapazitätsgründen können weitere Prozessoren in den Datenverarbeitungseinheiten vorgesehen sein.

Die beiden Datenverarbeitungseinheiten können jeweils an zwei gleich aufgebaute Datenübertragungsverbindungen oder Datenverarbeitungsnetzen angeschlossen sein. Damit kann auch bei der Datenübertragung eine hohe Verfügbarkeit und eine hohe Sicherheit gegen Übertragungsfehler gewährleistet werden.

Bspw. können die Daten über zwei verschiedene Wege übertragen werden, bspw. über zwei Bussysteme oder über zwei Netzebenen, vorzugsweise entlang verschiedener Übertragungsrichtungen, bspw. in einer Ringtopologie.

Die Datenübertragung kann drahtgebunden, fasergebunden oder drahtlos erfolgen. Die Datenübertragung kann synchron oder asynchron erfolgen. Insbesondere werden Nachrichten bei der Datenübertragung verwendet, die in Datenübertragungsprotokollen vorgesehen sind, z.B. Ethernet-Protokoll gemäß IEEE (Institute of Electrical and Electronics Engineers Inc.) 802.3, TCP/ IP (Transmission Control Protocol) / (Internet Protocol) gemäß der RFCs (Request For Comment) der IETF (Internet Engineering Task Force).

Aber auch die in der Automobilindustrie gebräuchlichen Bussystem werden verwendet, z.B.:
- doppelt ausgeführter CAN-Bus (Controller Area Network),
- TTP (Time Triggered Protocol),
- TTE (Time Triggered Ethernet),
- PROFINET (PROcess FIeld NETwork) ggf. mit IRT (Isochronous Real Time), oder
- FlexRay-Bus.

Weiterhin werden proprietäre Protokolle eingesetzt.

Die beiden Datenverarbeitungseinheiten können mindestens eine Kernfunktion zur Steuerung oder Regelung der Maschine erbringen. Kernfunktionen sind bspw.:
- Vorgabe von Lenkwinkeln,
- Vorgabe von Bremsbefehlen,
- automatische Abstandskontrolle,
- Regelung eines elektrischen Antriebsmotors, bspw. unter Verwendung einer feldorientierten Regelung.

Die Kernfunktionen können an zentraler Stelle in der Maschine bzw. in dem Fahrzeug erbracht werden. Aber auch eine verteilte Ausführung der Kernfunktionen ist möglich, bzw. eine Ausführung an anderer Stelle.

Die beiden Datenverarbeitungseinheiten können alternativ Funktionen in mindestens einem peripheren Teilsystem der Maschine erbringen. Periphere Teilsysteme sind bspw. Aktuatoren, z.B.:
- Umsetzung eines Lenkwinkeldatums in eine Lenkbewegung, wobei eine Lenkung automatisch betätigt wird,
- automatisches Betätigen einer Bremse,
- automatische Ansteuerung eines Verbrennungsmotors, bspw. Betätigen eines Ventils oder einer Drosselklappe,
- automatische Ansteuerung eines Elektromotors für den Antrieb.

Die auf die Vorrichtung bezogene Aufgabe wird durch eine Vorrichtung mit den im Anspruch 12 angegebenen Merkmalen gelöst. Weiterbildungen sind in den Unteransprüchen angegeben.

Es gelten die oben für das Verfahren genannten technischen Wirkungen. Durch Abschalten von Redundanz kann wiederum Energie effizient genutzt werden. Auch die erste Einheit kann eine entsprechende Steuereinheit zum Abschalten von Redundanz enthalten.

Die Vorrichtung kann eine erste Speichereinheit in der ersten Datenverarbeitungseinheit enthalten, wobei in der Speichereinheit vermerkt ist, dass die erste Datenverarbeitungseinheit bezüglich des Erbringens der Funktionen oder bezüglich der Redundanz Vorrang vor der zweiten Datenverarbeitungseinheit hat.

Auch in der zweiten Einheit kann es eine Speichereinheit geben, in der dann vermerkt ist, dass die zweite DV Einheit nachrangig zur ersten Einheit ist. Somit lässt sich hier das Master/Slave-Prinzip nutzen.

Die Vorrichtung kann die folgenden technischen Einrichtungen enthalten:
- erste Datenübertragungsverbindung, kurz DÜ Verbindung, oder erstes Datenverarbeitungsnetz, und
- zweite Datenübertragungsverbindung oder zweites Datenübertragungsnetz.

Die erste Datenverarbeitungseinheit und die zweite Datenverarbeitungseinheit können an der ersten DÜ Verbindung und an der zweiten DÜ Verbindung angeschlossen sein, wobei mindestens 60 Prozent der zu übertragenden Daten oder mindestens 90 Prozent der zu übertragenden Daten oder sogar alle zu übertragenden Daten über beide Datenübertragungsverbindungen oder über beide Datenübertragungsnetze übertragen werden.

Somit ist auch die Datenübertragung redundant und damit hoch verfügbar. Es werden insbesondere Datenübertragungsprotokolle gemäß der oben genannten Standards oder de-facto Standards verwendet, insbesondere auch proprietäre Protokolle.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele der Erfindung an Hand der beiliegenden Zeichnungen erläutert. Darin zeigen:
- Figur 1: zentrale und periphere Rechner in einem Fahrzeug,
- Figur 2: das Ein- und Ausschalten von Rechnern in dem Fahrzeug abhängig von verschiedenen Betriebszuständen,
- Figur 3: ein Verfahren zum Ein- und Ausschalten von Rechnern,
- Figur 4: Prozesstabellen, in denen auszuführende Prozesse vermerkt sind,
- Figur 5: ein Verfahren zum Ein- und Ausschalten von Prozessen, und
- Figur 6: den Aufbau einer zentralen Datenverarbeitungseinheit eines Fahrzeugs, die an einem Ethernet betrieben wird.

Erläutert wird eine Redundanzabschaltung im Standby von Fahrzeugen. Alternativ kann die Redundanzabschaltung auch in einem Flugzeug oder in einer anderen Maschine ausgeführt werden.

Wenn sicherheitskritische Komponenten in Fahrzeugen, wie z.B. Lenkung oder Bremsen, nicht mehr mechanisch bzw. hydraulisch angesteuert werden, d.h. die Ansteuerung wird bspw. elektrisch ausgeführt, muss es einen redundanten Weg geben, der im Fehlerfall, z.B. in einer CPU (Central Processing Unit), Stromleitung, Kommunikationsleitung, RAM (Random Access Memory), Rechenverfahren/ Funktion etc., die Ansteuerung übernehmen kann. Soll diese Rückfallebene ebenfalls keine mechanische Rückfallebene sein, muss die elektrische Ansteuerung selbst redundant ausgelegt sein. Das heißt, dass die elektrischen Leitungen doppelt ausgeführt und auch die Berechnungen für die Regelfunktionen oder Steuerfunktionen doppelt und auf mehreren Rechenkernen ausgeführt werden, um zufällige Fehler in den Kernen selbst zu entdecken.

Im Falle einer Duo-Duplex Struktur bedeutet das, dass neben mehrkanaligen Leitungen vier Prozessorkerne verwendet werden. Daher ist hier ein hoher Energiebedarf notwendig, d.h. bis zu dem Vierfachen gegenüber dem Energieverbrauch ohne redundante Ansteuerung. Die Redundanz wird aber nicht in allen Situationen benötigt. Komplett können die Systeme im Fahrzeug allerdings nicht abgeschaltet werden. Bspw. müssen beim Abstellen des Fahrzeugs Systeme aktiv sein. Sicherheitskritisch ist das allerdings nicht. Vielmehr kommt es hier im Standby darauf an, dass möglichst wenig Energie verbraucht wird, damit das Fahrzeug auch über einen längeren Zeitraum nicht betätigt werden muss (z.B. beim Parken). Gleiches gilt für Triplex-Strukturen.

Bisher wird im Fahrzeugbereich serienmäßig noch keine rein elektrische Ansteuerung sicherheitskritischer Systeme in einer Zentralarchitektur verwendet. X-by-wire Lösungen können bspw. nur für einzelne Teilsysteme aufgebaut sein. Dabei kann beim Parken dann das gesamte Teilsystem abgeschaltet werden.

In einer zentralen E-/E-Architektur (Elektrisch/Elektronische-Architektur) eines Fahrzeugs werden die Komponenten so ausgelegt, dass sie fähig sind, in einer Duo-Duplex- oder Triplex-Architektur zu funktionieren. Aufgeweckt werden können sie aber durch einen nicht redundanten Weckruf. Im Standby werden nur die notwendigen Funktionen ausgeführt und alle anderen nicht berechnet. Die redundanten Rechnerkerne werden abgeschaltet, sofern die verbleibenden aktiven Funktionen keine Redundanz benötigen. Die Berechnungen und die notwendige Kommunikation verlaufen nur noch einkanalig. Sobald die Redundanz wieder benötigt wird, werden die Kerne automatisch gebootet und synchronisiert: die Kommunikation verläuft wieder mehrkanalig. Die Subsysteme und Funktionen, die weiterhin nicht benötigt werden, bleiben weiterhin inaktiv und werden nicht redundant betrieben.

Nicht für jeden Zustand eines Fahrzeugs muss die E-/E-Architektur auch für die sicherheitskritischen Systeme redundant ausgelegt sein. Für bestimmte Zustände, z. B. Parken, kann auf Redundanz verzichtet werden, für andere Zustände wird nur in Teilsystemen Redundanz benötigt. Wenn keine Redundanz benötigt wird, wird der Energiebedarf gesenkt.

Standby-Modi für zentrale Steuereinheiten, wie redundante Rechenkerne, werden ermöglicht, ohne dass für diesen Modus extra weitere Geräte bzw. Subsysteme verbaut werden müssen. Standby-Zeiten werden erhöht. Der Zeitraum bis zu dem die Batterie wieder geladen werden muss, wird verlängert.

Wenn das System selbständig die Komponenten hochfahren kann, die für Redundanz notwendig sind, kann das Fahrzeug sicherheitskritische Funktionen auch ohne direkte Beaufsichtigung des Benutzers durchführen (z.B. ferngesteuerte Lade- oder Entladevorgänge).

Eine Ausgestaltung kann auch der Einsatz von n > 2 Duplex-Systemen sein: n-Duplex-Rechner (mit n mal je 2 Kerne pro Duplex-Einheit), wobei n eine natürliche Zahl ist.

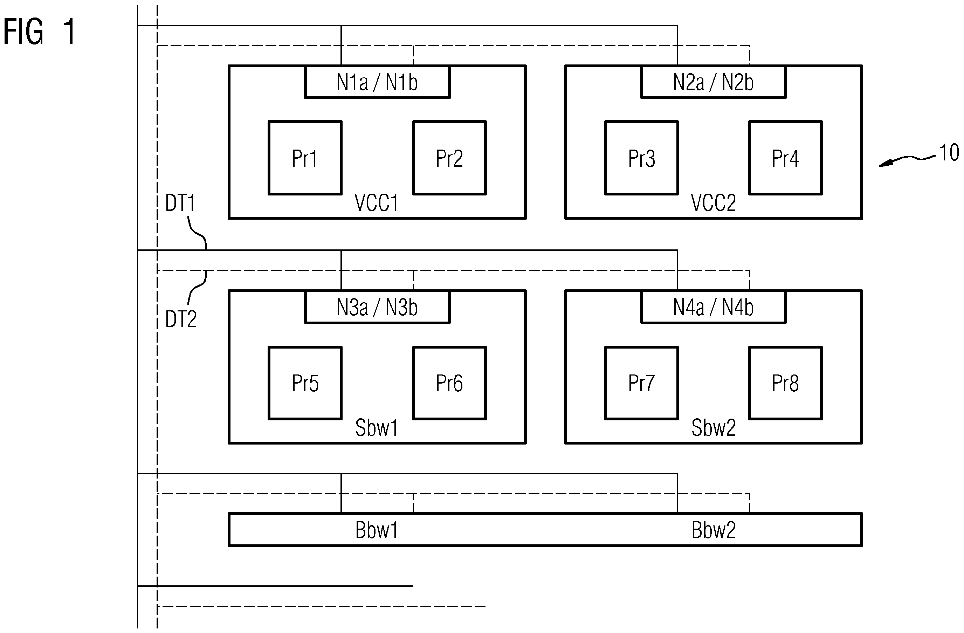

Die Figur 1 zeigt zentrale und periphere Rechner in einem Fahrzeug, insbesondere in einem akkumulatorbetriebenen bzw. batteriebetriebenen Fahrzeug bzw. Elektroauto. Das Fahrzeug enthält einen zentralen Bordrechner 10 und weitere Recheneinheiten.

Der zentrale Bordrechner 10 enthält:
- eine erste zentrale Steuereinheit VCC1, und
- eine zweite zentrale Steuereinheit VCC2.

Zu den weiteren Recheneinheiten gehören:
- eine erste Lenksteuerungseinheit Sbw1 (Steer by wire),
- eine zweite Lenksteuerungseinheit Sbw2,
- eine erste Bremssteuerungseinheit Bbw1 (Brake by wire),
- eine zweite Bremssteuerungseinheit Bbw2, sowie
- weitere nicht dargestellte Einheiten, die redundant oder einfach ausgeführt sind.

Weiterhin gibt es ein erstes Datenübertragungsnetz DT1 und ein zweites Datenübertragungsnetz DT2, welche den Bordrechner 10 und die weiteren Recheneinheiten verbinden.

Die erste zentrale Steuereinheit VCC1 enthält:
- einen Prozessor Pr1 und einen Prozessor Pr2, bspw. Mikroprozessoren, die Programmbefehle abarbeiten, die in nicht dargestellten Speichereinheiten gespeichert sind,
- zwei Übertragungseinheiten N1a, N1b, mit deren Hilfe eine Verbindung von und zu den Prozessoren Pr1 und Pr2 zu den Datenübertragungsnetzen DT1, DT2 hergestellt wird.

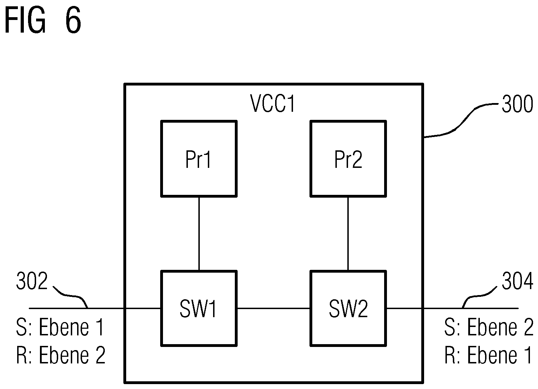

Die Übertragungseinheiten N1a, N1b werden bei Verwendung eines Ethernets bspw. durch zwei sogenannte Switche gebildet, was unten an Hand der Figur 6 noch näher erläutert wird. Andere Netze sind jedoch ebenfalls verwendbar, die insbesondere die in der Einleitung genannten Protokolle verwenden.

Die zweite zentrale Steuereinheit VCC2 enthält:
- einen Prozessor Pr3 und einen Prozessor Pr4, bspw. Mikroprozessoren, die Programmbefehle abarbeiten, die in nicht dargestellten Speichereinheiten gespeichert sind,
- zwei Übertragungseinheiten N2a, N2b, mit deren Hilfe eine Verbindung von und zu den Prozessoren Pr3 und Pr4 zu den Datenübertragungsnetzen DT1, DT2 hergestellt wird. Die Übertragungseinheiten N2a, N2b sind bspw. wie die Übertragungseinheit N1a, N1b aufgebaut.

Die erste zentrale Steuereinheit VCC1 und die zweite zentrale Steuereinheit VCC2 erbringen bspw. mindestens eine oder alle der folgenden Funktionen redundant:
- zentrale Funktionen für die Lenkung, wobei bspw. ein einzustellender Lenkwinkel ausgegeben wird,
- zentrale Funktionen für ein Fahren auf Abstand, wobei bspw. Beschleunigung- oder Abbremsdaten erzeugt werden,
- zentrale Funktionen für einen automatischen Bremsvorgang, z.B. im Rahmen eines ABS (Anti Blockier System),
- zentrale Funktionen einer Antischlupfregelung (ASR),
- zentrale Funktionen eines Stabilisierungsverfahrens ESP (Elektronisches Stabilisierungs-Programm),
- die Regelung eines Elektromotors, der als Antrieb für ein Elektrofahrzeug verwendet wird,
- zentrale Teile einer elektronischen Bremskraftverteilung (EBV).

Die erste Lenksteuerungseinheit Sbw1 enthält:
- einen Prozessor Pr5 und einen Prozessor Pr6, bspw. Mikroprozessoren, die Programmbefehle abarbeiten, die in nicht dargestellten Speichereinheiten gespeichert sind,
- zwei Übertragungseinheiten N3a, N3b, mit deren Hilfe eine Verbindung von und zu den Prozessoren Pr5 und Pr6 zu den Datenübertragungsnetzen DT1, DT2 hergestellt wird.

Die zweite Lenksteuerungseinheit Sbw2 enthält:
- einen ersten Prozessor Pr7 und einen zweiten Prozessor Pr8, bspw. Mikroprozessoren, die Programmbefehle abarbeiten, die in nicht dargestellten Speichereinheiten gespeichert sind,
- zwei Übertragungseinheiten N4a, N4b, mit deren Hilfe eine Verbindung von und zu den Prozessoren Pr7 und Pr8 zu den Datenübertragungsnetzen DT1, DT2 hergestellt wird.

Die erste Lenksteuerungseinheit Sbw1 und die zweite Lenksteuerungseinheit Sbw2 erbringen die folgenden Funktionen redundant:
- Umsetzung von empfangenen Daten für einen Lenkwinkel in eine Lenkbewegung des Fahrzeugs.

Die erste Bremssteuerungseinheit Bbw1 enthält:
- zwei nicht dargestellte Prozessoren, insbesondere Mikroprozessoren,
- zwei nicht dargestellte Übertragungseinheiten zur Kopplung der Prozessoren der erste Bremsansteuerungseinheit Bbw1 an die Datenübertragungsnetze DT1, DT2.

Die zweite Bremssteuerungseinheit Bbw2 enthält:
- zwei nicht dargestellte Prozessoren, insbesondere Mikroprozessoren,
- zwei nicht dargestellte Übertragungseinheiten zur Kopplung der Prozessoren der zweiten Bremsansteuerungseinheit Bbw2 an die Datenübertragungsnetze DT1, DT2.

Die erste Bremssteuerungseinheit Bbw1 und die zweite Bremssteuerungseinheit Bbw2 erbringen die folgenden Funktionen redundant:
- Betätigen einer Bremse abhängig von zentralen Vorgaben der Steuereinheiten VCC1 bzw. VCC2 bei Ausfall von VCC1,
- dezentrale Funktionen im Rahmen eines ABS Bremsvorgangs, und
- dezentrale Funktionen im Rahmen eines ESP Vorgangs.

Die Datenübertragungsnetze DT1, DT2 ermöglichen eine redundante Übertragung von Daten zwischen den in der Figur 1 dargestellten Einheiten. Die Datenübertragungsnetze DT1, DT2 arbeiten nach dem gleichen Übertragungsprotokoll, bspw. FlexRay, doppelter CAN-Bus oder Ethernet, wie unten an Hand der Figur 6 noch näher erläutert ist.

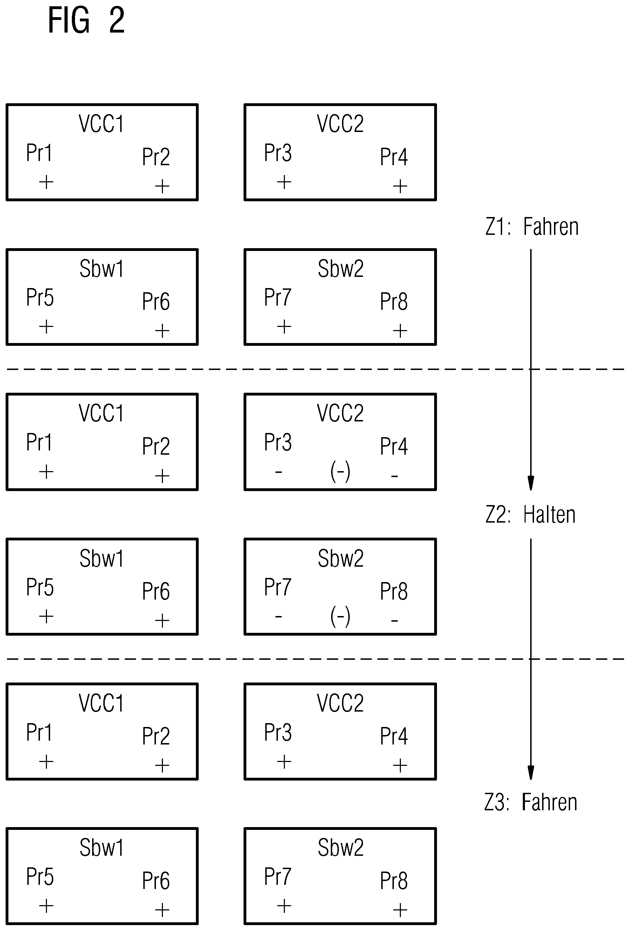

Die Figur 2 zeigt das Ein- und Ausschalten von Rechnern in dem Fahrzeug bzw. Bordnetz 10 abhängig von verschiedenen Betriebszuständen.

Ein Betriebszustand Z1 betrifft das Fahren des Fahrzeugs, z.B. mit mittlerer Geschwindigkeit (z.B. im Bereich von 30 km/h bis 60 Km/h). Ein Betriebszustand Z2 betrifft das Halten des Fahrzeugs, z.B. an einer Ampel. Der Betriebszustand Z2 folgt dem Betriebszustand Z1. Schaltet die Ampel auf Grün um, so folgt dem Betriebszustand Z2 ein Betriebszustand Z3 in dem das Fahrzeug wieder mit mittlerer Geschwindigkeit fährt.

Im Betriebszustand Z1 liegen die folgenden Schaltzustände vor:
- erste zentrale Steuereinheit VCC1: Prozessor Pr1 eingeschaltet, kurz ein, Prozessor Pr2 ein,
- zweite zentrale Steuereinheit VCC2: Prozessor Pr3 ein, Prozessor Pr4 ein,
- erste Lenksteuereinheit Sbw1: Prozessor Pr5 ein, Prozessor Pr6 ein, und
- zweite Lenksteuereinheit Sbw2: Prozessor Pr7 ein, Prozessor Pr8 ein.

Im Betriebszustand Z2 liegen die folgenden Schaltzustände vor:
- erste zentrale Steuereinheit VCC1: Prozessor Pr1 eingeschaltet, kurz ein, Prozessor Pr2 ein,
- zweite zentrale Steuereinheit VCC2: Prozessor Pr3 ausgeschaltet, kurz aus, Prozessor Pr4 aus,
- erste Lenksteuereinheit Sbw1: Prozessor Pr5 ein, Prozessor Pr6 ein, und
- zweite Lenksteuereinheit Sbw2: Prozessor Pr7 aus, Prozessor Pr8 aus.

Im Betriebszustand Z3 liegen wieder die im Betriebszustand Z1 genannten Schaltzustände vor.

Somit wird im Betriebszustand Z2 die Redundanz vermindert, um in einem für die Sicherheit von Personen unkritischen Zustand Energie effizient einzusetzen. Mindestens ein System bleibt jedoch aktiviert, hier die erste zentrale Steuereinheit VCC1 bzw. die erste Lenksteuereinheit Sbw1.

Die zentralen Steuereinheiten VCC1 und VCC2, die Lenksteuereinheiten Sbw1 und Sbw2 sowie die Bremssteuereinheiten Bbw1 und Bbw2 können alternativ auch als Gesamteinheit bezüglich des Ein- und Ausschaltens angesteuert werden im Gegensatz zu einem prozessorbezogenen Ein- und Ausschalten. Das Ein- und Ausschalten erfolgt bspw. durch Ein- oder Ausschalten von Stromversorgungseinheiten oder durch Trennen von Stromversorgungseinheiten bzw. durch Verbinden mit Stromversorgungseinheiten.

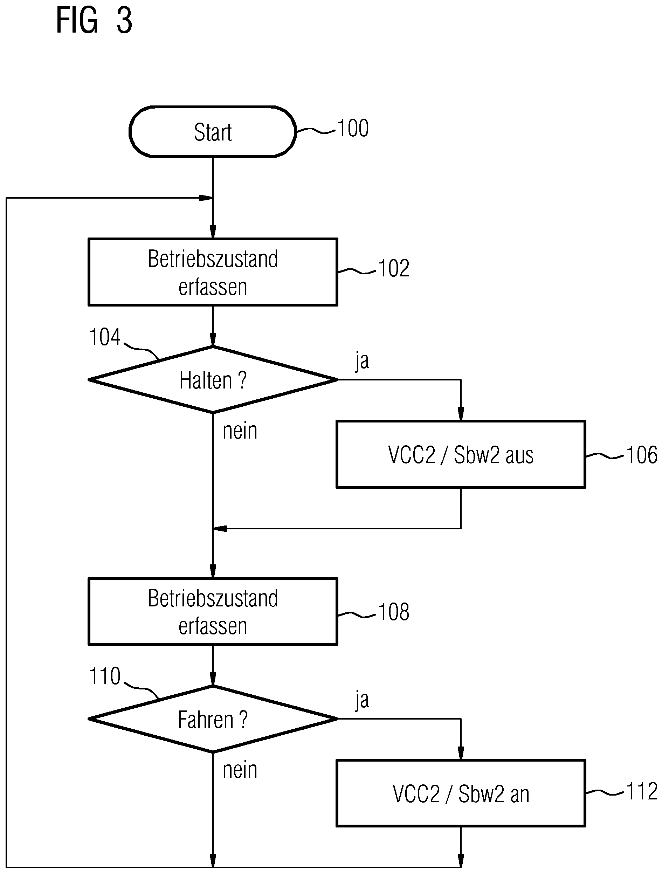

Die Figur 3 zeigt ein Verfahren zum Ein- und Ausschalten von Rechnern, mit dem bspw. zwischen den oben an Hand der Figur 2 gezeigten Schaltzuständen umgeschaltet wird.

Die in der Figur 3 gezeigten Verfahrensschritte 102 bis 106 werden bei einer ersten Variante in der zentralen Steuereinheit VCC2 durchgeführt. Die Verfahrensschritte 108 bis 112 werden bei der ersten Variante dagegen in der zentralen Steuereinheit VCC1 durchgeführt.

Das Verfahren beginnt in einem Verfahrensschritt 100, auch kurz als Schritt 100 bezeichnet.

In einem dem Schritt 100 folgenden Schritt 102 wird der Betriebszustand des Fahrzeugs erfasst, bspw. von der zweiten zentralen Steuereinheit VCC2.

Nach dem Schritt 102 wird von der zweiten zentralen Steuereinheit VCC2 der Schritt 104 durchgeführt. Im Schritt 104 wird geprüft, ob das Fahrzeug im Betriebszustand Z2 ist, d.h. Halten. Ist das Fahrzeug im Betriebszustand Z2, d.h. Halten, so folgt dem Schritt 104 unmittelbar ein Verfahrensschritt 106, in welchem die zweite Steuereinheit VCC2 sich selbst ausschaltet.

Ist das Fahrzeug dagegen nicht im Betriebszustand Z2, d.h. Halten, so folgt dem Schritt 104 unmittelbar ein Verfahrensschritt 108, in welchem die erste Steuereinheit VCC1 den Betriebszustand erfasst.

In einem dem Schritt 108 folgenden Verfahrensschritt 110 prüft die erste Steuereinheit VCC1, ob der Zustand Z1, Z3, d.h. Fahren, aktiv ist. Ist das Fahrzeug im Betriebszustand Z1 bzw. Z3, d.h. Fahren, so folgt dem Schritt 110 unmittelbar ein Verfahrensschritt 112, in welchem die erste Steuereinheit VCC1 die zweite Steuereinheit VCC2 einschaltet.

Ist das Fahrzeug dagegen nicht im Betriebszustand Z1, bzw. Z3, d.h. Fahren, so folgt dem Schritt 110 unmittelbar wieder der Verfahrensschritt 102.

Bei einer zweiten Variante wird das in Figur 3 gezeigte Verfahren für die zweite Lenksteuereinheit Sbw2 durchgeführt. Die in der Figur 3 gezeigten Verfahrensschritte 102 bis 106 werden bei der zweiten Variante in der zweiten Lenksteuereinheit Sbw2 durchgeführt. Die Verfahrensschritte 108 bis 112 werden bei der zweiten Variante dagegen in der ersten Lenksteuereinheit Sbw1 durchgeführt.

Das Verfahren beginnt wieder in einem Verfahrensschritt 100, auch kurz als Schritt 100 bezeichnet.

In einem dem Schritt 100 folgenden Schritt 102 wird der Betriebszustand des Fahrzeugs erfasst, bspw. von der zweiten Lenksteuereinheit Sbw2.

Nach dem Schritt 102 wird von der zweiten Lenksteuereinheit Sbw2 der Schritt 104 durchgeführt. Im Schritt 104 wird geprüft, ob das Fahrzeug im Betriebszustand Z2 ist, d.h. Halten. Ist das Fahrzeug im Betriebszustand Z2, d.h. Halten, so folgt dem Schritt 104 unmittelbar ein Verfahrensschritt 106, in welchem die zweite Lenksteuereinheit Sbw2 sich selbst ausschaltet.

Ist das Fahrzeug dagegen nicht im Betriebszustand Z2, d.h. Halten, so folgt dem Schritt 104 unmittelbar ein Verfahrensschritt 108, in welchem die erste Lenksteuereinheit Sbw1 den Betriebszustand erfasst.

In einem dem Schritt 108 folgenden Verfahrensschritt 110 prüft die erste Lenksteuereinheit Sbw1, ob der Zustand Z1, Z3, d.h. Fahren, aktiv ist. Ist das Fahrzeug im Betriebszustand Z1 bzw. Z3, d.h. Fahren, so folgt dem Schritt 110 unmittelbar ein Verfahrensschritt 112, in welchem die erste Lenksteuereinheit Sbw1 die zweite Lenksteuereinheit Sbw2 einschaltet.

Ist das Fahrzeug dagegen nicht im Betriebszustand Z1, bzw. Z3, d.h. Fahren, so folgt dem Schritt 110 unmittelbar wieder der Verfahrensschritt 102.

In einem optionalen zusätzlichen Verfahrensschritt, der bspw. zwischen den Verfahrensschritten 102 und 104 liegt, kann bei beiden Varianten der Figur 3 geprüft werden, ob noch eine Redundanz vorhanden ist, d.h. ob die zentrale Steuereinheit VCC1 bzw. die erste Lenksteuereinheit Sbw1 noch voll funktionsfähig ist. Ist dies der Fall wird das Verfahren so durchgeführt, wie es oben erläutert worden ist. Steht dagegen die zentrale Steuereinheit VCC1 oder die erste Lenksteuereinheit Sbw1 nicht mehr zur Verfügung wird das Verfahren abgebrochen.

Das in der Figur 3 gezeigte Verfahren ist nur ein Beispiel. Die gleichen Funktionen lassen sich auch durch andere Verfahren erzielen, bspw. kann ein Verfahren zum Umschalten der Schaltzustände nur bei einem Wechsel der Betriebszustände aufgerufen werden, so dass die Betriebszustände nicht dauernd ermittelt werden müssen. Auch zyklische Abfragen der Betriebszustände kommen in Betracht.

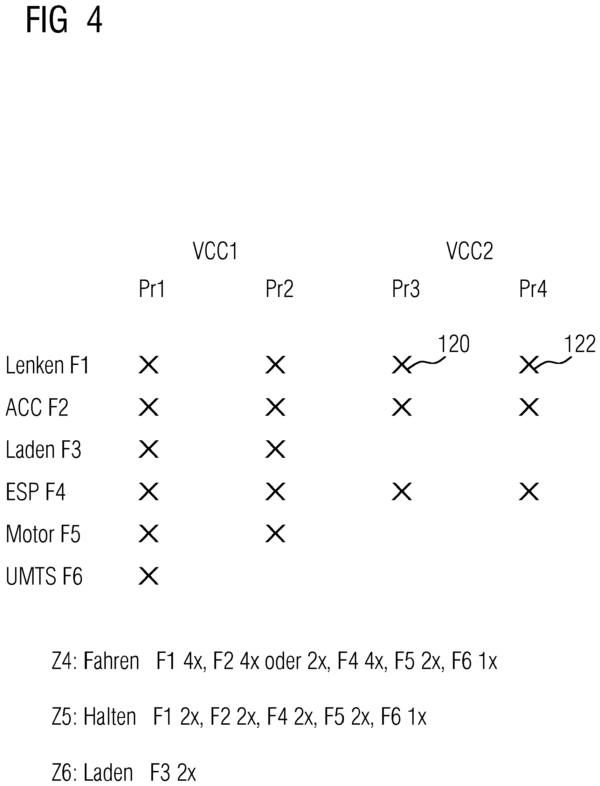

Die Figur 4 zeigt Prozesstabellen, in denen auszuführende Prozesse vermerkt sind. Bspw. entspricht jede Spalte einer Prozesstabelle, wobei die Prozesstabellen wie folgt den Prozessoren Pr1 bis Pr4 zugeordnet sind:
- Spalte 1, d.h. erste Prozesstabelle, dem Prozessor Pr1,
- Spalte 2, d.h. zweite Prozesstabelle, dem Prozessor Pr2,
- Spalte 3, d.h. dritte Prozesstabelle, dem Prozessor Pr3, und
- Spalte 4, d.h. vierte Prozesstabelle, dem Prozessor Pr4,

In den vier Prozesstabellen betreffen die folgenden Zeilen jeweils:
- erste Zeile: eine Funktion F1, die im Beispiel das Lenken betrifft,
- zweite Zeile: eine Funktion F2, die im Beispiel das Halten einer vorgegebenen Geschwindigkeit betrifft (ACC - Automatic Cruising Control),
- dritte Zeile: eine Funktion F3, die im Beispiel das Laden eines Akkumulators betrifft, umgangssprachlich auch Akku oder Batterie genannt,
- vierte Zeile: eine Funktion F4, die im Beispiel das elektronische Stabilisieren ESP des Fahrzeugs betrifft,
- fünfte Zeile: eine Funktion F5, die im Beispiel die Motorsteuerung betrifft, insbesondere die Reglung eines Elektromotors, und
- sechste Zeile: eine Funktion F6, die im Beispiel eine Verbindung zu einem Mobilfunknetz betrifft, hier zum UMTS (Universal Mobile Telecommunications System) oder alternativ zu einem LTE Netz (Long Term Evolution).

Die in Figur 4 gezeigten Kreuze an den Schnittstellen von Zeilen und Spalten symbolisieren einen Vermerk in der betreffenden Prozesstabelle. Ist der Vermerk vorhanden, so wird ein zu der betreffenden Funktion gehörender Prozess in dem betreffenden Prozessor ausgeführt. Ist der Vermerk an einer Stelle dagegen nicht mehr vorhanden, so wird kein Prozess ausgeführt, der die Funktion erbringt, für die die betreffende Zeile vorgesehen ist.

Ein Vermerk 120 betrifft bspw. die Funktion F1 im Prozessor Pr3. Ein Vermerk 122 betrifft bspw. die Funktion F1 im Prozessor Pr4.

Die in Figur 4 gezeigten Vermerke entsprechen bspw. einem Zustand in dem die Energie nicht effizient genutzt wird, weil Redundanz nicht gezielt abgebaut wird.

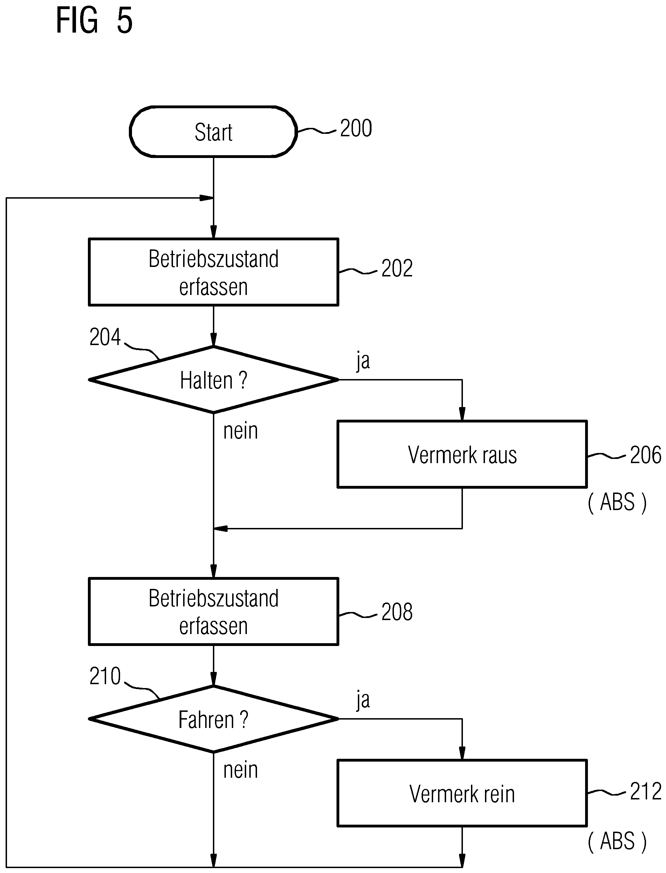

Mit dem an Hand der Figur 5 erläuterten Verfahren ist es dagegen möglich, Redundanz gezielt zu verringern:
In einem bereits energieoptimierten Zustand Z4 "Fahren" gilt Folgendes:
- Vermerke für die Funktion F1 "Lenken" sind in allen Prozesstabellen eingetragen,
- Vermerke für die Funktion F2 "ACC" (Automatic Cruising Control) sind in allen Prozesstabellen eingetragen, wenn diese Funktion aktiv ist. Alternativ sind nur Vermerke für die Prozessoren Pr1 und P2 eingetragen, wenn die Funktion "ACC" nicht genutzt wird.
- Die Vermerke für die Funktion F3 sind alle entfernt, weil das Fahrzeug bspw. beschleunigt.
- Vermerke für die Funktion F4 "ESP" sind in allen vier Prozesstabellen eingetragen. Alternativ kann in unkritischen Fahrsituation ein Vermerk für Prozessor Pr1 und ein Vermerk für Prozessor Pr2 ausreichen.
- Für die Motorsteuerung/-regelung sind zwei Vermerke in den Spalten für Prozessor Pr1 und für Prozessor Pr2 vorhanden.
- Ein Vermerk ist für die Funktion F6 (UMTS) in der ersten Spalte vorhanden, d.h. in der Spalte für Prozessor Pr1.

In einem Betriebszustand Z5 hält das Fahrzeug, bspw. an einer Ampel. Deshalb werden von der zweiten zentralen Steuereinheit VCC2 die Vermerke 120 und 122 entfernt. Dies ist zulässig, weil beim Halten keine oder nur unkritische Lenkbewegungen zu erwarten sind und deshalb keine vierfache Redundanz erforderlich ist. In den ersten beiden Spalten sind die Vermerke für die Funktion F1 "Lenken" dagegen noch vorhanden.

Im Betriebszustand Z5 können die Vermerke für die Funktion F2 "ACC" in den Spalten für die Prozessoren Pr3 und Pr4 entfernt werden. In den ersten beiden Spalten, d.h. in den Spalten für die Prozessoren Pr1 und Pr2, bleiben die Vermerke für die Funktion F2 "ACC", dagegen stehen. Die Funktionen F4 und F5 werden jeweils vom Prozessor Pr1 bzw. Pr2 erbracht. Die Funktion F6 wird vom Prozessor Pr1 erbracht.

In einem Betriebszustand Z6 steht das Fahrzeug und wird bspw. über eine Steckdose aufgeladen. Es sind nur noch die zwei Vermerke in der dritten Zeile vorhanden, d.h. für das Laden. Alle anderen Vermerke sind gelöscht. Somit können die Prozessoren Pr3 und Pr4 abgeschaltet werden und die Prozessoren Pr1 und Pr2 benötigen nur eine kleine Rechenleistung.

Die Figur 5 zeigt ein Verfahren zum Ein- und Ausschalten von Prozessen.

Die in der Figur 5 gezeigten Verfahrensschritte 200 bis 212 werden bei einer ersten Variante in der zentralen Steuereinheit VCC2 durchgeführt.

Das Verfahren beginnt in einem Verfahrensschritt 200, auch kurz als Schritt 200 bezeichnet. In einem dem Schritt 200 folgenden Schritt 202 wird der Betriebszustand des Fahrzeugs erfasst, bspw. von der zweiten zentralen Steuereinheit VCC2.

Nach dem Schritt 202 wird von der zweiten zentralen Steuereinheit VCC2 der Schritt 204 durchgeführt. Im Schritt 204 wird geprüft, ob das Fahrzeug im Betriebszustand Z5 ist. Ist das Fahrzeug im Betriebszustand Z5, d.h. Halten, so folgt dem Schritt 204 unmittelbar ein Verfahrensschritt 206, in welchem die zweite Steuereinheit VCC2 die Funktion F1 ausschaltet durch Entfernen der Vermerke 120 und 120 in einer Prozesstabelle bzw. in zwei Prozesstabellen. Damit wird die Funktion F1 von den Prozessoren Pr3 und Pr4 nicht mehr ausgeführt.

Ist das Fahrzeug dagegen nicht im Betriebszustand Z5, d.h. Halten, so folgt dem Schritt 204 unmittelbar ein Verfahrensschritt 208, in welchem die zweite Steuereinheit VCC2 den Betriebszustand erneut erfasst.

In einem dem Schritt 208 folgenden Verfahrensschritt 210 prüft die zweite Steuereinheit VCC2, ob der Zustand Z4, d.h. Fahren, aktiv ist. Ist das Fahrzeug im Betriebszustand Z4, d.h. Fahren, so folgt dem Schritt 210 unmittelbar ein Verfahrensschritt 212, in welchem die zweite Steuereinheit VCC2 die Funktion F1 einschaltet, bspw. durch Eintragen der Vermerke 120 und 122 in den beiden Prozesstabellen, siehe Figur 4.

Ist das Fahrzeug dagegen nicht im Betriebszustand Z4, d.h. Fahren, so folgt dem Schritt 210 unmittelbar wieder der Verfahrensschritt 202.

Bei einer zweiten Variante wird das in Figur 5 gezeigte Verfahren für die zweite Bremssteuereinheit Bbw2 durchgeführt. Bei der zweiten Variante werden die Verfahrensschritte 200 bis 212 in der Bremssteuereinheit Bbw2 durchgeführt.

Das Verfahren beginnt wieder in einem Verfahrensschritt 200, auch kurz als Schritt 200 bezeichnet. In einem dem Schritt 200 folgenden Schritt 202 wird der Betriebszustand des Fahrzeugs erfasst, bspw. von der zweiten Bremssteuereinheit Bbw2.

Nach dem Schritt 202 wird von der zweiten Bremssteuereinheit Bbw2 der Schritt 204 durchgeführt. Im Schritt 204 wird geprüft, ob das Fahrzeug im Betriebszustand Z5 ist. Ist das Fahrzeug im Betriebszustand Z5, d.h. Halten, so folgt dem Schritt 204 unmittelbar ein Verfahrensschritt 206, in welchem die zweite Bremssteuereinheit Bbw2 die Funktion ABS ausschaltet durch Entfernen von Vermerken in einer Prozesstabelle bzw. in zwei Prozesstabellen der zweiten Bremssteuereinheit Bbw2. Damit wird die Funktion ABS von den beiden Prozessoren der zweiten Bremssteuereinheit Bbw2 nicht mehr ausgeführt.

Ist das Fahrzeug dagegen nicht im Betriebszustand Z5, d.h. Halten, so folgt dem Schritt 204 unmittelbar ein Verfahrensschritt 208, in welchem die zweite Bremssteuereinheit Bbw2 den Betriebszustand erneut erfasst.

In einem dem Schritt 208 folgenden Verfahrensschritt 210 prüft die Bremssteuereinheit Bbw2, ob der Zustand Z4, d.h. Fahren, aktiv ist. Ist das Fahrzeug im Betriebszustand Z4, d.h. Fahren, so folgt dem Schritt 210 unmittelbar ein Verfahrensschritt 212, in welchem die zweite Bremssteuereinheit Bbw2 die Funktion ABS einschaltet, bspw. durch Eintragen der zuvor entfernten Vermerke in den beiden Prozesstabellen der zweiten Bremssteuereinheit Bbw2.

Ist das Fahrzeug dagegen nicht im Betriebszustand Z4, d.h. Fahren, so folgt dem Schritt 210 unmittelbar wieder der Verfahrensschritt 202.

In einem optionalen zusätzlichen Verfahrensschritt, der bspw. zwischen den Verfahrensschritten 202 und 204 liegt, kann bei den an Hand der Figur 5 erläuterten Verfahren geprüft werden, ob noch eine Redundanz vorhanden ist, d.h. ob die zentrale Steuereinheit VCC1 bzw. die erste Bremssteuereinheit Bbw1 noch voll funktionsfähig ist. Ist dies der Fall, wird das Verfahren so durchgeführt, wie es oben erläutert worden ist. Steht dagegen die zentrale Steuereinheit VCC1 bzw. die erste Bremssteuereinheit Bbw1 nicht mehr zur Verfügung wird das Verfahren abgebrochen.

Das in der Figur 5 gezeigte Verfahren ist nur ein Beispiel. Die gleichen Funktionen lassen sich auch durch andere Verfahren erzielen, bspw. kann ein Verfahren zum Umschalten der Schaltzustände nur bei einem Wechsel der Betriebszustände aufgerufen werden, so dass die Betriebszustände nicht dauernd ermittelt werden müssen. Auch zyklische Abfragen der Betriebszustände kommen in Betracht.

Die Figur 6 zeigt den Aufbau einer zentralen Datenverarbeitungseinheit 300 bzw. VCC1 eines Fahrzeugs, wobei die Datenverarbeitungseinheit 300 bzw. VCC1 an einem Ethernet betrieben wird.

Die zentrale Steuereinheit 300 enthält neben den oben bereits erwähnten Prozessoren Pr1 und Pr2, sowie den nicht dargestellten zugehörigen Speichereinheiten:
- einen ersten Switch SW1, der gemäß Ethernetprotokoll arbeitet, und
- einen zweiten Switch SW2, der gemäß Ethernetprotokoll arbeitet.

Der Switch SW1 hat Verbindungen zu:
- dem Prozessor Pr1,
- dem Switch SW2, und
- einem Netzabschnitt 302.

Der Switch SW2 hat Verbindungen zu:
- dem Prozessor Pr2,
- dem Switch SW1, und
- einem Netzabschnitt 304.

Es sind bspw. zwei Netzebenen des Ethernets definiert. Bezüglich des Netzabschnitts 302 sendet der Switch SW1 auf der Ebene 1 und empfängt auf der Ebene 2. Bezüglich des Netzabschnitts 304 sendet der Switch SW2 auf der Ebene 2 und empfängt auf der Ebene 1.

Somit empfängt (R - receive) die Steuereinheit 300 bzw. VCC1 Daten von rechts in der Ebene 1, die sie entweder selbst bearbeitet oder nach links in der Ebene 1 wieder versendet (S - send). In der Ebene 2 empfängt (R - receive) die Steuereinheit 300 bzw. VCC1 Daten von links, die sie entweder selbst bearbeitet oder nach rechts in der Ebene 2 wieder versendet (S - send). Durch diese Topologie und durch diese Festlegungen lassen sich Ringtopologien oder andere Netztopologien mit zwei Übertragungsrichtungen aufbauen, um eine redundante Datenübertragung zu ermöglichen. Bspw. muss eine Nachricht erst über beide Ebenen 1 und 2 empfangen worden sein, bevor sie bearbeitet wird und damit Steuervorgänge oder Regelvorgänge auslösen kann.

In höheren Protokollebenen wird im Ausführungsbeispiel TCP/IP verwendet. Es lassen sich jedoch auch andere Netzwerkprotokolle an Stelle von Ethernet bzw. TCP/IP verwenden.

Die Datenverarbeitungseinheit VCC2 ist beim Ausführungsbeispiel der Figur 6 ebenso aufgebaut wie die Datenverarbeitungseinheit VCC1, d.h. sie enthält neben den Prozessoren Pr3 und Pr4 ebenfalls zwei Switche SW3 und SW4. Der Switch SW3 ist bspw. mit einem Netzabschnitt 302b verbunden und der Switch SW4 ist mit einem Netzabschnitt 304b verbunden. Die beiden Steuereinheiten VCC1 und VCC2 lassen sich in der folgenden Reihenfolge bspw. zu einem inneren Ring verbinden:
- Steuereinheit 300 bzw. VCC1,
- Netzabschnitt 302,
- fünfter Ethernet Switch SW5,
- Netzabschnitt 304b,
- Steuereinheit VCC2,
- Netzabschnitt 302b,
- sechster Ethernet Switch SW6,
- Netzabschnitt 304.

In dieser Ringtopologie sind dann zwei Übertragungsrichtungen für Nachrichten möglich. Eine Richtung in der Ebene 1 des Netzes und die entgegengesetzte Richtung in der Ebene 2 des Netzes. Somit besteht eine erste Redundanz. Ist ein Segment des Ringes nicht verfügbar, so lassen sich alle Einheiten über zumindest eine der Übertragungsrichtungen erreichen, was weitere Redundanz bedeutet.

An die Switche SW5 und SW6 lässt sich dann mindestens ein weiterer Ethernetring anschließen, in dem dann auf gleiche Weise die Lenksteuereinheiten Sbw1, Sbw2, die Bremssteuereinheiten Bbw1 und Bbw2 sowie ggf. weitere Einheiten angeschlossen sind.

Die Ausführungsbeispiele sind nicht maßstabsgetreu und nicht beschränkend. Abwandlungen im Rahmen des fachmännischen Handelns sind möglich. Obwohl die Erfindung im Detail durch das bevorzugte Ausführungsbeispiel näher illustriert und beschrieben worden ist, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben mindestens zweier Datenverarbeitungseinheiten (VCC1, VCC2) mit hoher Verfügbarkeit,
bei dem eine zweite Datenverarbeitungseinheit (VCC2) automatisch mindestens einen Vermerk (120, 122) für einen auszuführenden Prozess aus einer Speichereinheit entfernt oder sich automatisch in einen Ruhezustand versetzt,
wobei das Entfernen des mindestens einen Vermerks (120, 122) oder das Versetzen in den Ruhezustand abhängig vom Betriebszustand (Z1 bis Z6) einer Transportmaschine erfolgt, für deren Betrieb die Datenverarbeitungseinheiten (VCC1, VCC2) verwendet werden, wobei der Betriebszustand (Z1 bis Z6) Halten (Z2, Z5) und Fahren (Z1, Z3, Z4) umfasst und wobei das Entfernen des mindestens einen Vermerks (120, 122) oder das Versetzen in den Ruhezustand beim Betriebszustand Halten (Z2, Z5) erfolgt.

2. Verfahren nach Anspruch 1, wobei der Betriebszustand (Z1 bis Z6) mit Hilfe mindestens einer Sensoreinheit erfasst wird, insbesondere mit einem Bewegungssensor, einem Geschwindigkeitssensor oder einem Drehzahlsensor.

3. Verfahren nach Anspruch 1 oder 2, wobei der Betriebszustand (Z1 bis Z6) zusätzlich Laden (Z6) eines Akkus umfasst.

4. Verfahren nach einem der vorhergehenden Ansprüche, wobei die Datenverarbeitungseinheiten (VCC1, VCC2) an einem Datenübertragungsnetz (DT1, DT2) mit einem Datenübertragungsprotokoll betrieben werden, das das Einschalten von Prozessoren (Pr1 bis Pr6) oder Netzeinheiten (N1 bis N4) ermöglicht, insbesondere an einem Ethernet.

5. Verfahren nach einem der vorhergehenden Ansprüche, wobei der entfernte Vermerk (120, 122) automatisch wieder durch die zweite Datenverarbeitungseinheit (VCC2) eingetragen wird, vorzugsweise abhängig vom aktuellen Betriebszustand (Z1 bis Z6) der Maschine.

6. Verfahren nach einem der vorhergehenden Ansprüche, wobei der Ruhezustand ein Zustand ist, in dem die Stromversorgung der zweiten Datenverarbeitungseinheit (VCC2) ausgeschaltet ist oder in dem die zweite Datenverarbeitungseinheit (VCC2) von ihrer Stromversorgung getrennt ist.

7. Verfahren nach Anspruch 6, wobei der Ruhezustand durch eine erste Datenverarbeitungseinheit (VCC1) beendet wird, insbesondere durch Veranlassen des Einschaltens einer Stromversorgung der zweiten Datenverarbeitungseinheit (VCC2) oder durch Veranlassen des Verbindens der Stromversorgung der zweiten Datenverarbeitungseinheit (VCC2) mit der zweiten Datenverarbeitungseinheit (VCC2).

8. Verfahren nach einem der vorhergehenden Ansprüche, wobei jede der Datenverarbeitungseinheiten (VCC1, VCC2) jeweils mindestens zwei Prozessoren (Pr1 bis Pr4) enthält.

9. Verfahren nach einem der vorhergehenden Ansprüche, wobei die beiden Datenverarbeitungseinheiten (VCC1, VCC2) jeweils an zwei redundante Datenübertragungsverbindungen (DT1, DT2) oder Datenverarbeitungsnetze angeschlossen sind.

10. Verfahren nach einem der vorhergehenden Ansprüche, wobei die beiden Datenverarbeitungseinheiten (VCC1, VCC2) mindestens eine Kernfunktionen zur Steuerung oder Regelung der Maschine erbringen.

11. Verfahren nach einem der vorhergehenden Ansprüche, wobei die beiden Datenverarbeitungseinheiten (Sbw1, Sbw2; Bbw1, Bbw2) mindestens eine Funktion in mindestens einem peripheren Teilsystem der Transportmaschine erbringen.

12. Vorrichtung (10) zum Betreiben einer Transportmaschine mit einer ersten Datenverarbeitungseinheit (VCC1) und
mit einer zweiten Datenverarbeitungseinheit (VCC2) mit hoher Verfügbarkeit, wobei die Datenverarbeitungseinheiten (VCC1, VCC2) für den Betrieb der Transportmaschine verwendet werden, und mit einer ersten Steuereinheit in der zweiten Datenverarbeitungseinheit (VCC2),
wobei die erste Steuereinheit abhängig vom Betriebszustand (Z1 bis Z6) der Transportmaschine mindestens einen Vermerk (120, 122) für einen auszuführenden Prozess aus einer Speichereinheit entfernt oder die zweite Datenverarbeitungseinheit (VCC2) automatisch in einen Ruhezustand versetzt, wobei der Betriebszustand (Z1 bis Z6) Halten (Z2, Z5) und Fahren (Z1, Z3, Z4) umfasst und wobei das Entfernen des mindestens einen Vermerks (120, 122) oder das Versetzen in den Ruhezustand beim Betriebszustand Halten (Z2, Z5) erfolgt.

13. Vorrichtung (10) nach Anspruch 12,
mit einer ersten Datenübertragungsverbindung (DT1) oder einem ersten Datenverarbeitungsnetz und mit einer zweiten Datenübertragungsverbindung (DT2) oder einem zweiten Datenübertragungsnetz an dem die erste Datenverarbeitungseinheit (VCC1) und die zweite Datenverarbeitungseinheit (VCC2) angeschlossen sind,
wobei mindestens 60 Prozent der zu übertragenden Daten oder mindestens 90 Prozent der zu übertragenden Daten über beide Datenübertragungsverbindungen (DT1, DT2) oder über beide Datenübertragungsnetze übertragen werden.

14. Vorrichtung nach Anspruch 12 oder 13,
mit einer ersten Speichereinheit in der ersten Datenverarbeitungseinheit (VCC1), wobei in der ersten Speichereinheit vermerkt ist, dass die erste Datenverarbeitungseinheit (VCC1) bezüglich des Erbringens der Funktionen oder bezüglich der Redundanz Vorrang vor der zweiten Datenverarbeitungseinheit (VCC2) hat.

## Claims

1. Method for operating at least two data processing units (VCC1, VCC2) with high availability,
in which a second data processing unit (VCC2) automatically removes at least one entry (120, 122) for a process to be executed from a memory unit or automatically places itself into a standby mode,
wherein the removal of the at least one entry (120, 122) or the placing into the standby mode occurs in dependence on the operating state (Z1 to Z6) of a transport machine, for the operation of which the data processing units (VCC1, VCC2) are used, wherein the operating state (Z1 to Z6) comprises stopping (Z2, Z5) and travelling (Z1, Z3, Z4), and wherein the removal of the at least one entry (120, 122) or the placing into the standby mode occurs in the stopping operating state (Z2, Z5).

2. Method according to Claim 1, wherein the operating state (Z1 to Z6) is detected with the aid of at least one sensor unit, especially a motion sensor, a speed sensor or a tachometer.

3. Method according to Claim 1 or 2, wherein the operating state (Z1 to Z6) additionally comprises charging (Z6) a rechargeable battery.

4. Method according to one of the preceding claims, wherein the data processing units (VCC1, VCC2) are operated on a data transmission network (DT1, DT2) using a data transmission protocol which enables processors (Pr1 to Pr6) or network units (N1 to N4) to be switched on, especially on an Ethernet.

5. Method according to one of the preceding claims, wherein the entry (120, 122) removed is entered again automatically by the second data processing unit (VCC2), preferably in dependence on the current operating state (Z1 to Z6) of the machine.

6. Method according to one of the preceding claims, wherein the standby mode is a state in which the power supply of the second data processing unit (VCC2) is switched off or in which the second data processing unit (VCC2) is isolated from its power supply.

7. Method according to Claim 6, wherein the standby mode is ended by a first data processing unit (VCC1), particularly by initiating the switching-on of a power supply of the second data processing unit (VCC2) or by initiating the connecting of the power supply of the second data processing unit (VCC2) to the second data processing unit (VCC2).

8. Method according to one of the preceding claims, wherein each of the data processing units (VCC1, VCC2) contains in each case at least two processors (Pr1 to Pr4).

9. Method according to one of the preceding claims, wherein the two data processing units (VCC1, VCC2) are connected in each case to two redundant data transmission links (DT1, DT2) or data processing networks.

10. Method according to one of the preceding claims, wherein the two data processing units (VCC1, VCC2) provide at least one core function for controlling or regulating the machine.

11. Method according to one of the preceding claims, wherein the two data processing units (Sbw1, Sbw2; Bbw1, Bbw2) provide at least one function in at least one peripheral subsystem of the transport machine.

12. Device (10) for operating a transport machine,
with a first data processing unit (VCC1) and with a second data processing unit (VCC2), with high availability, wherein the data processing units (VCC1, VCC2) are used to operate the transport machine, and with a first control unit in the second data processing unit (VCC2),
wherein the first control unit removes at least one entry (120, 122) for a process to be executed from a memory unit or places the second data processing unit (VCC2) automatically into a standby mode in dependence on the operating state (Z1 to Z6) of the transport machine, wherein the operating state (Z1 to Z6) comprises stopping (Z2, Z5) and travelling (Z1, Z3, Z4), and wherein the removal of the at least one entry (120, 122) or the placing into the standby mode occurs in the stopping operating state (Z2, Z5).

13. Device (10) according to Claim 12,
with a first data transmission link (DT1) or a first data processing network and with a second data transmission link (DT2) or a second data transmission network, to which the first data processing unit (VCC1) and the second data processing unit (VCC2) are connected,
wherein at least 60 per cent of the data to be transmitted or at least 90 per cent of the data to be transmitted are transmitted via both data transmission links (DT1, DT2) or via both data transmission networks.

14. Device according to Claim 12 or 13,
with a first memory unit in the first data processing unit (VCC1), wherein it is entered in the first memory unit that the first data processing unit (VCC1) is higher-ranking than the second data processing unit (VCC2) with respect to providing functions or with respect to the redundancy.

## Revendications

1. Procédé pour faire fonctionner au moins deux unités de traitement de données (VCC1, VCC2) avec une grande disponibilité,
dans lequel une seconde unité de traitement de données (VCC2) supprime automatiquement d'une unité mémoire au moins une annotation (120, 122) relative à un processus à exécuter ou passe automatiquement en mode veille,
dans lequel la suppression de l'au moins une annotation (120, 122) ou le passage en mode veille s'effectue en fonction de l'état de fonctionnement (Z1 à Z6) d'une machine de transport pour le fonctionnement de laquelle les unités de traitement de données (VCC1, VCC2) sont utilisées,
dans lequel l'état de fonctionnement (Z1 à Z6) comprend "à l'arrêt" (Z2, Z5) et "en roulement" (Z1, Z3, Z4) et dans lequel la suppression de l'au moins une annotation (120, 122) ou le passage en mode veille s'effectue lors de l'état de fonctionnement "à l'arrêt" (Z2, Z5).

2. Procédé selon la revendication 1,
dans lequel l'état de fonctionnement (Z1 à Z6) est détecté à l'aide d'au moins une unité de détection, notamment à l'aide d'un détecteur de mouvement, d'un capteur de vitesse ou d'un capteur de vitesse de rotation.

3. Procédé selon la revendication 1 ou 2,
dans lequel l'état de fonctionnement (Z1 à Z6) comprend en outre la charge (Z6) d'une batterie.

4. Procédé selon l'une quelconque des revendications précédentes,
dans lequel les unités de traitement de données (VCC1, VCC2) fonctionnent, à l'aide d'un protocole de transmission de données qui permet l'activation de processeurs (Pr1 à Pr6) ou d'unités de réseau (N1 à N4), sur un réseau de transmission de données (DT1, DT2), notamment sur un réseau Ethernet.

5. Procédé selon l'une quelconque des revendications précédentes,
dans lequel l'annotation (120, 122) supprimée est automatiquement entrée de nouveau par la seconde unité de traitement de données (VCC2), de préférence en fonction de l'état de fonctionnement (Z1 à Z6) actuel de la machine.

6. Procédé selon l'une quelconque des revendications précédentes,
dans lequel le mode veille est un état dans lequel l'alimentation en courant de la seconde unité de traitement de données (VCC2) est coupée ou dans lequel la seconde unité de traitement de données (VCC2) est séparée de son alimentation en courant.

7. Procédé selon la revendication 6,
dans lequel une première unité de traitement de données (VCC1) met fin au mode veille, notamment en causant la mise en circuit d'une alimentation en courant de la seconde unité de traitement de données (VCC2) ou en causant la connexion de l'alimentation en courant de la seconde unité de traitement de données (VCC2) à la seconde unité de traitement de données (VCC2).

8. Procédé selon l'une quelconque des revendications précédentes,
dans lequel chacune des unités de traitement de données (VCC1, VCC2) contient respectivement au moins deux processeurs (Pr1 à Pr4).

9. Procédé selon l'une quelconque des revendications précédentes,
dans lequel des deux unités de traitement de données (VCC1, VCC2) sont connectées respectivement à deux liaisons de transmission de données (DT1, DT2) ou réseaux de traitement de données redondantes/redondants.

10. Procédé selon l'une quelconque des revendications précédentes,
dans lequel les deux unités de traitement de données (VCC1, VCC2) accomplissent au moins une fonction de cœur pour la commande ou la régulation de la machine.

11. Procédé selon l'une quelconque des revendications précédentes,
dans lequel des deux unités de traitement de données (Sbw1, Sbw2; Bbw1, Bbw2) accomplissent au moins une fonction dans au moins un système partiel périphérique de la machine de transport.

12. Dispositif (10) pour faire fonctionner une machine de transport comprenant une première unité de traitement de données (VCC1) et comprenant une seconde unité de traitement de données (VCC2) avec une grande disponibilité,
dans lequel les unités de traitement de données (VCC1, VCC2) sont utilisées pour le fonctionnement de la machine de transport, et comprenant une première unité de commande dans la seconde unité de traitement de données (VCC2), dans lequel la première unité de commande supprime d'une unité mémoire au moins une annotation (120, 122) relative à un processus à exécuter en fonction de l'état de fonctionnement (Z1 à Z6) de la machine de transport ou fait automatiquement passer en mode veille la seconde unité de traitement de données (VCC2),
dans lequel l'état de fonctionnement (Z1 à Z6) comprend "à l'arrêt" (Z2, Z5) et "en roulement" (Z1, Z3, Z4) et dans lequel la suppression de l'au moins une annotation (120, 122) ou le passage en mode veille s'effectue lors de l'état de fonctionnement "à l'arrêt" (Z2, Z5).

13. Dispositif (10) selon la revendication 12,
comprenant une première liaison de transmission de données (DT1) ou un premier réseau de traitement de données et comprenant une seconde liaison de transmission de données (DT2) ou un second réseau de transmission de données auquel la première unité de traitement de données (VCC1) et la seconde unité de traitement de données (VCC2) sont connectées,
dans lequel au moins soixante pour cent des données à transmettre ou au moins quatre-vingt dix pour cent des données à transmettre sont transmises par le biais des deux liaison de transmission de données (DT1, DT2) ou par le biais des deux réseaux de transmission de données.

14. Dispositif selon la revendication 12 ou 13,
comprenant une première unité mémoire dans la première unité de traitement de données (VCC1), dans lequel la première unité mémoire contient une annotation selon laquelle la première unité de traitement de données (VCC1) est prioritaire sur la seconde unité de traitement de données (VCC2) en ce qui concerne l'accomplissement des fonctions ou en ce qui concerne la redondance.
